# EUROPEAN PATENT APPLICATION

(11) **EP 2 423 730 A1**
(43) Date of publication of application: **29.02.2012**
(21) Application number: 10766912.9
(22) Date of filing: 12.03.2010
(51) Int. Cl.: G02B 26/10, G02B 27/18, G03B 21/00

(54) **SCANNING OPTICAL SYSTEM AND PROJECTOR PROVIDED WITH THE SAME**

(30) Priority: 21.04.2009 JP 2009102651
(71) Applicant: Konica Minolta Opto, Inc., Hachioji-shi Tokyo 192-8505 (JP)
(72) Inventor: HIRAO, Yusuke, Hino-Shi Tokyo 191-8511 (JP); OKUMURA, Sueyoshi, Hino-Shi Tokyo 191-8511 (JP); KONNO, Kenji, Hachioji-Shi Tokyo 192-8505 (JP)
(74) Representative: HOFFMANN EITLE
(86) International application number: PCT/JP2010/054188
(87) International publication number: WO 2010/122853

(57) **Abstract**

Provided is is scanning optical system having reduced dimensions. The scanning optical system (10) is provided with a laser light source section (1), lens optical systems (11, 17, 19) which make laser beams parallel to each other, and a scanning section (2) which performs laser beam scanning by changing the tilt of a scanning minor (3). The laser beams made parallel to each other travel toward the scanning mirror (3) by being reflected by means of a plurality of optical members, and a plane including at least two optical paths intersects the normal line direction of the reflecting surface (3a) of the scanning mirror (3) in the non-driven state.

## Description

### Technical Field

The present invention relates to a scanning optical system and a projector provided with the same.

### Background Art

As an image display device that projects images onto a projection surface such as a screen, there has been conventionally known a laser projector that collimates laser light and performs scanning with the collimated laser light over a projection surface in two-dimensional directions (a horizontal direction and a vertical direction).

In such a conventional laser projector, in order to obtain laser light beams of three primary colors of red, green, and blue, laser light sources that generate red, green, and blue laser light beams, respectively, are mounted inside. Moreover, in addition to the laser light sources, optical systems such as a scanning mirror that performs scanning with laser light outputted from the laser light sources are also mounted inside. As a conventional example, there exists a laser projector using, as a scanning mirror, a MEMS mirror constituted of MEMS (micro-electro-mechanical systems) (see, for example, Patent Document 1).

To be specific, Patent Document 1 discloses a laser projector that performs two-dimensional scanning with laser light by use of two MEMS mirrors. That is, the laser projector described in Patent Document 1 has a configuration in which one of the two MEMS mirrors is used for scanning with laser light in a horizontal direction, and the other is used for scanning with laser light in a vertical direction.

### List of Citations

### Patent Literature

Patent Document 1: JP-A-2008-268709

### Summary of Invention

### Technical Problem

By the way, in recent years, there has been a demand for miniaturization of laser projectors so that they are mountable in mobile terminals such as a mobile telephone. With the advancement in miniaturization of mobile telephones in particular, it is imperative that laser projectors for use in mobile telephones be further miniaturized. On the contrary, the laser projector described in Patent Document 1, while achieving some degree of miniaturization by using a MEMS mirror as a scanning mirror, is still too large in size from the viewpoint of being mounted in a mobile telephone.

The present invention has been made to solve the above-described problem and has as its object to provide a scanning optical system that can be miniaturized and a projector provided with the same.

### Solution to the Problem

In order to achieve the above-described object, a scanning optical system according to a first aspect of the present invention includes: a laser light source portion that outputs a plurality of laser light beams; a lens optical system that collimates each of the plurality of laser light beams; and a scanning portion that has a scanning mirror for reflecting the plurality of laser light beams toward a projection surface and performs scanning with the plurality of laser light beams through varying an inclination of the scanning mirror. The scanning optical system is configured so that the plurality of laser light beams after being collimated are reflected by a plurality of optical components to travel toward the scanning mirror, and so that, where an optical path between any two of the optical components different from each other is defined to form one optical path, a plane including at least two optical paths intersects (may be orthogonal to) a normal direction of a reflection surface of the scanning mirror in a non-driven state.

As described above, the scanning optical system according to the first aspect is configured so that a plurality of laser light beams after being collimated are reflected by the plurality of optical components to travel toward the scanning mirror, and so that, where an optical path between any two of the optical components different from each other is defined to form one optical path, a plane including at least two optical paths is orthogonal to the normal direction of the reflection surface of the scanning mirror in the non-driven state. According to this configuration, even in a case where optical paths are made somewhat long for the purpose of obtaining an optimum optical path length, the optical paths are brought to a state of being folded in the plane orthogonal to the normal direction of the reflection surface of the scanning mirror in the non-driven state and thus can be disposed collectively in a compact manner. This allows the scanning optical system to be reduced in plan area and in thickness and thus can achieve miniaturization of the scanning optical system. The plan area of the scanning optical system refers to an area thereof as seen from the side of a region opposed to the reflection surface of the scanning mirror in the non-driven state, and the thickness of the scanning optical system refers to a thickness thereof in a direction along the normal direction of the reflection surface of the scanning mirror in the non-driven state.

Furthermore, in the above-described configuration, at least some of the optical paths included in the plane orthogonal to the normal direction of the reflection surface of the scanning mirror in the non-driven state are disposed in a region over the scanning portion (region overlapping the scanning portion as seen from the side of the region opposed to the reflection surface of the scanning mirror in the non-driven state), and thus a required optical path length can be secured in the region over the scanning portion. Thus, there is no need to make optical paths so long that they extend to a region (region not overlapping the scanning portion as seen from the side of the region opposed to the reflection surface of the scanning mirror in the non-driven state) other than the region over the scanning portion for the purpose of obtaining an optimum optical path length. That is, the presence of optical paths in the region other than the region over the scanning portion can be reduced. Consequently, the scanning optical system can be further reduced in plan area as a result of the thus reduced presence of optical paths in the region other than the region over the scanning portion.

Preferably, the above-described scanning optical system according to the first aspect is configured so that at least one of the plurality of laser light beams is reflected three or more times in a plane orthogonal to the normal direction of the reflection surface of the scanning mirror in the non-driven state and then enters the scanning mirror. According to this configuration, even in a case where optical paths of at least one of a plurality of laser light beams need to be made longer, the at least one of a plurality of laser light beams is reflected three or more times such that its optical paths are folded, and thus optical paths can be easily disposed collectively in a compact manner. Furthermore, since at least one of a plurality of laser light beams is reflected three or more times, it is easy to allow the at least one of a plurality of laser light beams to be synthesized with the other laser light beams and the laser light beams thus synthesized to enter the scanning mirror.

In the above-described scanning optical system according to the first aspect, preferably, the scanning portion is constituted of micro-electro-mechanical systems into which the scanning mirror is incorporated, and the scanning mirror incorporated into the micro-electro-mechanical systems is rotatable around two axes orthogonal to each other. According to this configuration, the scanning portion can be reduced in thickness, so that it becomes easy to form the scanning optical system to be thin.

Moreover, since the scanning mirror is rotatable around the two axes orthogonal to each other, two-dimensional scanning with synthesized laser light can be performed using a single scanning mirror, so that there is no need to use two scanning mirrors to perform two-dimensional scanning with synthesized laser light. This reduces a space required for installing a scanning mirror and thus can achieve further miniaturization of the scanning optical system.

In this case, preferably, the scanning mirror is driven using a piezoelectric element. Thanks to the thin structure of a piezoelectric element, which is still sufficient for the piezoelectric element to allow the scanning mirror to swing, the scanning portion of a piezoelectric driving type is formed to be extremely thin.

In the above-described scanning optical system according to the first aspect, preferably, a light output direction of the laser light source portion is parallel to the reflection surface of the scanning mirror in the non-driven state. According to this configuration, at least two optical paths can be easily disposed in the plane orthogonal to the normal direction of the reflection surface of the scanning mirror in the non-driven state.

In the above-described scanning optical system according to the first aspect, preferably, at least one of the plurality of laser light beams is generated by a semiconductor laser. According to this configuration, thanks to the small size of a semiconductor laser, the laser light source portion itself can be reduced in size. This can easily achieve further reductions in plan area and in thickness of the scanning optical system.

Furthermore, a projector according to a second aspect of the present invention includes: a casing; and a scanning optical system housed in the casing. The scanning optical system includes: a laser light source portion that outputs a plurality of laser light beams; a lens optical system that collimates each of the plurality of laser light beams; and a scanning portion that has a scanning mirror for reflecting the plurality of laser light beams toward a projection surface and performs scanning with the plurality of laser light beams through varying an inclination of the scanning mirror. The scanning optical system is configured so that the plurality of laser light beams after being collimated are reflected by a plurality of optical components to travel toward the scanning mirror, and so that, where an optical path between any two of the optical components different from each other is defined to form one optical path, a plane including at least two optical paths intersects (may be orthogonal to) a normal direction of a reflection surface of the scanning mirror in a non-driven state.

According to this configuration, optical paths can be disposed collectively in a compact manner, and thus the scanning optical system can be reduced in plan area and in thickness, so that miniaturization of the projector provided with the scanning optical system can be easily achieved.

Preferably, the above-described projector according to the second aspect is configured so that, in the casing, at least one of the plurality of laser light beams is reflected three or more times in a plane orthogonal to the normal direction of the reflection surface of the scanning mirror in the non-driven state and then enters the scanning mirror. According to this configuration, optical paths can be easily disposed collectively in a compact manner. Furthermore, it is easy to allow at least one of a plurality of laser light beams to be synthesized with the other laser light beams and the laser light beams thus synthesized to enter the scanning mirror.

The above-described projector according to the second aspect may be configured so that, in the casing, at least one of the plurality of laser light beams is reflected three or more times in a plane parallel to the reflection surface of the scanning mirror to travel along at least three sides of the casing and then enters the scanning mirror. According to this configuration, optical paths can be easily disposed collectively in a compact manner. Furthermore, it is easy to allow at least one of a plurality of laser light beams to be synthesized with the other laser light beams and the laser light beams thus synthesized to enter the scanning mirror.

### Advantageous Effects of the Invention

As discussed above, according to the present invention, a scanning optical system and a projector provided with the same can be easily miniaturized.

### Brief Description of Drawings

[Fig. 1] A view showing a state where a projector according to a first embodiment of the present invention is mounted in a mobile terminal.
[Fig. 2] A view for illustrating a configuration of a scanning optical system according to the first embodiment of the present invention.
[Fig. 3] A view corresponding to a cross section along line A-A' of Fig. 2.
[Fig. 4] A plan view of a scanning portion of the scanning optical system shown in Fig. 2.
[Fig. 5] A cross-sectional view showing, in an enlarged scale, a portion (driving portion) of the scanning portion shown in Fig. 4.
[Fig. 6] A view for illustrating a configuration of a scanning optical system according to a modification example of the first embodiment.
[Fig. 7] A view corresponding a cross section along line B-B' of Fig. 6.
[Fig. 8] A view for illustrating a configuration of a scanning optical system according to a second embodiment of the present invention.
[Fig. 9] A view corresponding a cross section along line C-C' of Fig. 8.

### Description of Embodiments

### (First Embodiment)

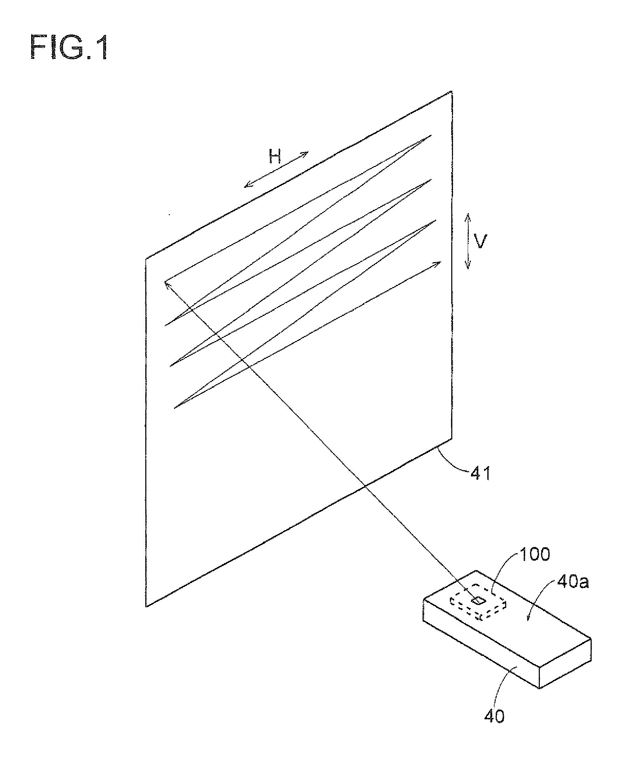

Referring to Fig. 1, a projector 100 of a first embodiment is designed to be mounted in a mobile terminal 40 that is, for example, a mobile telephone or a PDA (personal digital assistant). The projector 100 is therefore miniaturized to such a degree that it can be housed in a small space in the mobile terminal 40.

The projector 100 uses a light source that generates laser light, and scanning with laser light is performed over a projection surface 41 in a horizontal direction (H direction) and in a vertical direction (V direction) so that image information inputted to the projector 100 is projected onto the projection surface 41. The projection surface 41 may be a separately prepared screen or any object other than a screen. For example, a wall surface or the like may be used as the projection surface 41.

Furthermore, color tones of image information inputted to the projector 100 are reproduced by intensity-modulating laser light beams of three primary light colors of red, green, and blue at a high speed and by synthesizing the laser light beams thus intensity-modulated. In this case, the red laser light beam is set to have a wavelength of, for example, about 640 nm, and the green laser light beam is set to have a wavelength of, for example, about 530 nm. Furthermore, the blue laser light beam is set to have a wavelength of, for example, about 450 nm.

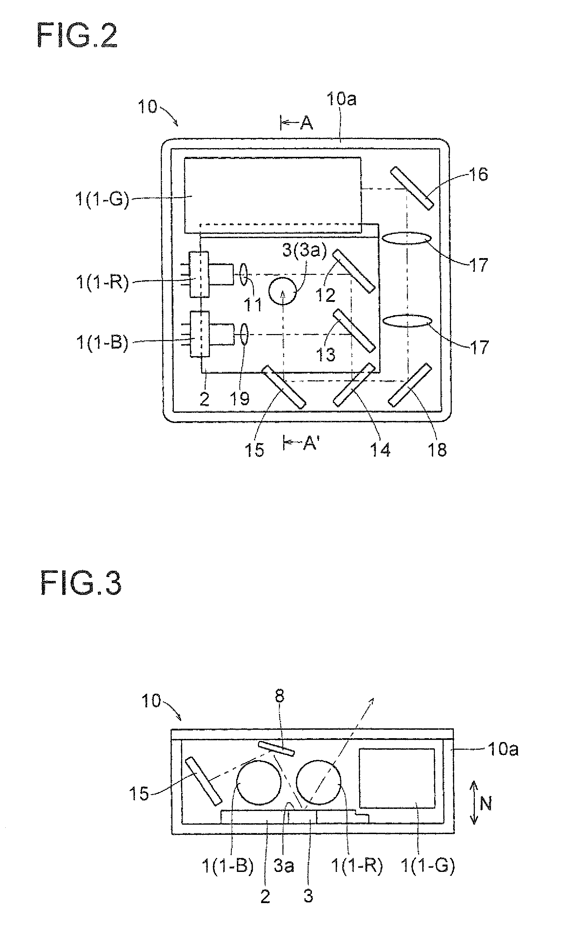

Furthermore, referring to Figs. 2 to 5, a scanning optical system 10 of the first embodiment is configured to generate and collimate red, green, and blue laser light beams, after which synthesis thereof is performed, and to perform scanning with the laser light beams thus synthesized. That is, the scanning optical system 10 has a configuration in which a laser light source portion 1, a scanning portion 2, and a plurality of optical components such as a mirror are provided and housed in a predetermined case member (casing) 10a. In Figs. 2 and 3, laser light beams are denoted by chain double-dashed lines.

The laser light source portion 1 is intended to generate red, green, and blue laser light beams. Hereinafter, as parts constituting the laser light source portion 1, a laser light source part that generates a red laser light beam is referred to as a laser light source part 1-R, and a laser light source part that generates a green laser light beam is referred to as a laser light source part 1-G. Furthermore, a laser light source part that generates a blue laser light beam is referred to as a laser light source part 1-B.

The laser light source part 1-R is constituted of a red semiconductor laser that has a high light emission intensity and is capable of high-speed intensity modulation. The red semiconductor laser as the laser light source part 1-R is of a CAN package type and has a structure in which a laser chip is mounted onto a heat radiation base referred to as a stem and is covered with a cap that is a protection member.

The laser light source part 1-G is formed by combining a red semiconductor laser with a wavelength conversion element and generates a green laser light beam by making the wavelength conversion element perform wavelength conversion of a laser light beam from the red semiconductor laser to half the original wavelength thereof. Although there is no particular limitation on the structure of the laser light source part 1-G, this combination of a red semiconductor laser with a wavelength conversion element is favorable in that it provides higher efficiency.

The laser light source part 1-B is constituted of a blue semiconductor laser of the CAN package type that has a high light emission intensity and is capable of high-speed intensity modulation, and the structure thereof is substantially the same as that of the laser light source part 1-R.

Furthermore, the scanning portion 2 is intended to perform two-dimensional scanning with synthesized laser light and has at least a scanning mirror 3 that reflects synthesized laser light toward the projection surface 41 (see Fig. 1). The scanning mirror 3 is made variable in inclination angle (reflection angle), and the scanning portion 2 performs two-dimensional scanning with synthesized laser light through varying the inclination angle of the scanning mirror 3.

In the first embodiment, the scanning mirror 3 is incorporated into MEMS (micro-electro-mcchanical systems), and the MEMS into which the scanning mirror 3 is incorporated are used as the scanning portion 2. Furthermore, the scanning portion 2 is substantially flat and small in thickness and has, in plan (see Fig. 2), a substantially square outer shape (whose each side length is about 1 cm).

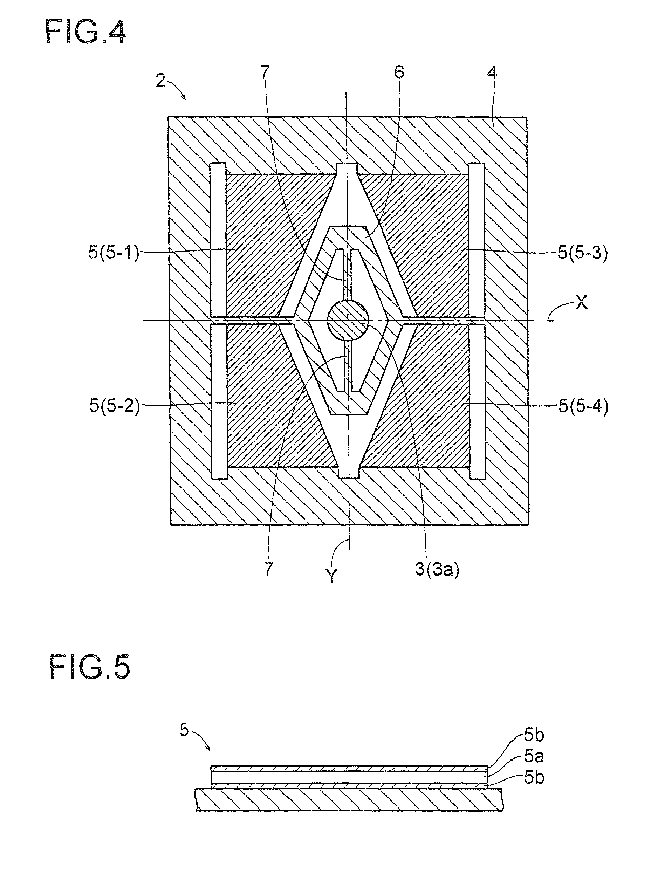

To specifically describe this structure, as shown in Fig. 4, the scanning portion 2 is a structural body obtained by subjecting a silicon substrate to etching or the like and has, in addition to the scanning mirror 3, a stationary frame 4, a driving portion 5, a movable frame 6, and so on to form one unit. In the following description, an axis crossing a center of the scanning mirror 3 in the lateral direction in Fig. 4 is defined as an X axis, and an axis crossing the center of the scanning mirror 3 in the longitudinal direction in Fig. 4 is defined as a Y axis. Conversely, a point at which the X axis and the Y axis are orthogonal to each other is defined as the center of the scanning mirror 3.

The stationary frame 4 is a portion corresponding to an outer rim of the scanning portion 2 and surrounds other portions (the scanning mirror 3, the driving portion 5, the movable frame 6, and so on).

The driving portion 5 is separated from the stationary frame 4 in an X axis direction and is connected to the stationary frame 4 in a Y axis direction. Moreover, the driving portion 5 includes four unimorph structures that are disposed in such a state as to be symmetrical with respect to each of the X axis and the Y axis as a symmetry axis and to be away from each other. Furthermore, as shown in Fig. 5, the unimorph structures constituting the driving portion 5 are formed by sandwiching a piezoelectric element (obtained by polarizing a sintered body made of PZT or the like) 5a between a pair of electrodes 5b and by attaching a resulting laminate onto a region of the silicon substrate, in which the driving portion 5 is to be formed.

In the driving portion 5 configured as above, when a voltage is applied to the pair of electrodes 5b, the piezoelectric element 5a sandwiched between the pair of electrodes 5b expands or contracts. When the piezoelectric element 5a expands or contracts, in response thereto, the region of the silicon substrate, in which the driving portion 5 is formed, also expands or contracts. That is, the driving portion 5 is driven by being supplied with power.

Furthermore, as shown in Fig. 4, the movable frame 6 is a substantially rhombic frame positioned on the inner side of the driving portion 5. The movable frame 6 is connected at both end portions thereof on the X-axis to the driving portion 5 and is separated at other portions thereof from the driving portion 5. This makes the movable frame 6 rotatable around the X axis.

On the inner side of the movable frame 6, a pair of torsion bars 7 extending along the Y axis direction are provided. The pair of torsion bars 7 are disposed so as to coincide with the Y axis and to be symmetrical with respect to the X axis. Moreover, respective one ends of the pair of torsion bars 7 are connected to end portions of the movable frame 6 on the Y axis, respectively.

The scanning mirror 3 is disposed between and supported by the respective other ends of the pair of torsion bars 7. This allows the scanning mirror 3 to be rotated around the X axis together with the movable frame 6 and also around the Y axis with respect to the torsion bars 7 as a rotation shaft. The scanning mirror 3 is formed in a substantially circular shape and is obtained by attaching a reflection film made of gold, aluminum, or the like onto a region of the silicon substrate, in which the scanning mirror 3 is to be formed.

The scanning portion 2 of the first embodiment has the above-described structure. The scanning portion 2 performs a scanning operation by adjusting timing for driving (causing expansion and contraction of) the four structures constituting the driving portion 5 so that the scanning mirror 3 swings around the X axis and around the Y axis. For example, a frequency at which the scanning mirror 3 swings around the X axis is set to about 60 Hz, and a frequency at which the scanning mirror 3 swings around the Y axis is set to about 30 Hz.

For a specific description below, the four structures constituting the driving portion 5 are denoted by reference signs 5-1 to 5-4, respectively. In a case where the scanning mirror 3 is made to swing around the X axis, with respect to the driving parts 5-1 and 5-3 as one pair and the driving parts 5-2 and 5-4 as the other pair, voltage application is performed so that positive and negative polarities of voltages applied to these pairs, respectively, are inverted. In this case, if the driving parts 5-1 and 5-3 as the one pair are deformed in a direction in which they expand, the driving parts 5-2 and 5-4 as the other pair are deformed in a direction in which they contract, and if the driving parts 5-1 and 5-3 as the one pair are deformed in a direction in which they contract, the driving parts 5-2 and 5-4 as the other pair are deformed in a direction in which they expand. As a result, the scanning mirror 3 swings around the X axis together with the movable frame 6, and the inclination of the scanning mirror 3 therefore varies around the X axis. Incidentally, the torsional direction of the torsion bars 7 is orthogonal to the direction of swinging around the X axis and therefore does not affect the swinging of the scanning mirror 3 around the X axis.

Furthermore, in a case where the scanning mirror 3 is made to swing around the Y axis, with respect to the driving parts 5-1 and 5-2 as one pair and the driving parts 5-3 and 5-4 as the other pair, voltage application is performed so that positive and negative polarities of voltages applied to these pairs, respectively, are inverted. In this case, if the driving parts 5-1 and 5-2 as the one pair are deformed in a direction in which they expand, the driving parts 5-3 and 5-4 as the other pair are deformed in a direction in which they contract, and if the driving parts 5-1 and 5-2 as the one pair are deformed in a direction in which they contract, the driving parts 5-3 and 5-4 as the other pair are deformed in a direction in which they expand. As a result, the scanning mirror 3 swings around the Y axis together with the movable frame 6, and the inclination of the scanning mirror 3 therefore varies around the Y axis.

At this time, if it is sought to make the scanning mirror 3 inclined around the Y axis merely by deforming the driving portion 5, a resulting variation in the inclination of the scanning mirror 3 around the Y axis is limited. As a solution to this, in an actual scanning operation, a frequency of a voltage applied to the driving portion 5 is set to such a value as to cause the scanning mirror 3 to resonate in response to the frequency. That is, swinging of the scanning mirror 3 around the Y axis occurs relative to the torsion bars 7.

By operating the scanning portion 2 in the above-described manner, the scanning mirror 3 can be rotated around the two axes orthogonal to each other, and two-dimensional scanning with synthesized laser light can be performed using a single scanning mirror as the scanning mirror 3.

By the way, the first embodiment is configured so that red, green, and blue laser light beams take optical paths shown in Figs. 2 and 3 (chain double-dashed lines in the figures). That is, red, green, and blue laser light beams are collimated and are then reflected by a plurality of optical components to travel toward the scanning mirror 3. Furthermore, where an optical path between any two of the optical components different from each other is defined to form one optical path, a plane including at least two optical paths is made orthogonal to a normal direction N (see Fig. 3) of a reflection surface 3a of the scanning mirror 3 in a non-driven state. The following describes in detail optical paths of red, green, and blue laser light beams.

First, in the case member 10a, the laser light source parts 1-G, 1-R, and 1-B are arranged in this order in a direction from an upper side toward a lower side in Fig. 2. Moreover, the laser light source parts 1-R, 1-G, and 1-B are disposed so that their respective light output directions are the same and parallel to the reflection surface 3a of the scanning mirror 3 in the non-driven state. Furthermore, in plan (see Fig. 2), each of the laser light source parts 1-R, 1-G, and 1-B partially overlaps the scanning portion 2. Among them, the laser light source parts 1-R and 1-B are each in a state where most part thereof on a light output side fully overlaps the scanning portion 2.

Furthermore, though not shown in Fig. 2, a projection mirror 8 for projecting synthesized laser light onto the scanning mirror 3 is disposed near above the scanning mirror 3 (see Fig. 3). That is, by the projection mirror 8, synthesized laser light is reflected toward the scanning mirror 3. The projection mirror 8 represents one example of the "optical components" of the present invention.

To specifically describe optical paths, a red laser light beam, after being outputted from the laser light source part 1-R, travels via a lens optical system 11, a bending mirror 12, a dichroic mirror 13, a dichroic mirror 14, a bending mirror 15, and the projection mirror 8 in this order and is reflected by the projection mirror 8 to enter the scanning mirror 3.

The lens optical system 11 is intended to collimate laser light in the form of divergent light into parallel light. The bending mirrors 12 and 15 are intended to simply change a travel direction of laser light and each represent one example of the "optical components" of the present invention. The dichroic mirror 13 transmits a red laser light beam therethrough while reflecting a blue laser light beam and is disposed as shown in Fig. 2 so as to have a function of synthesizing red and blue laser light beams. Furthermore, the dichroic mirror 14 reflects red and blue laser light beams while transmitting a green laser light beam therethrough and is disposed as shown in Fig. 2 so as to have a function of synthesizing red, green, and blue laser light beams. The dichroic mirrors 13 and 14 each also represent one example of the "optical components" of the present invention.

The red laser light beam, after being collimated by the lens optical system 11, takes optical paths in the same plane, except immediately upstream and downstream of the projection mirror 8 (downstream of the bending mirror 15). That is, after being collimated by the lens optical system 11, the red laser light beam travels, in the same plane, via the bending mirror 12, the dichroic mirror 13, the dichroic mirror 14, and the bending mirror 15 in this order.

A green laser light beam, after being outputted from the laser light source part 1-G, travels via a bending mirror 16, a lens optical system 17, a bending mirror 18, the dichroic mirror 14, the bending mirror 15, and the projection mirror 8 in this order and is reflected by the projection mirror 8 to enter the scanning mirror 3. The lens optical system 17 for a green laser light beam is made up of two lenses here but may be made up of a single lens.

The lens optical system 17 is intended to collimate laser light in the form of divergent light into parallel light. The bending mirror 18 is intended to simply change a travel direction of laser light and represents one example of the "optical components" of the present invention. The bending mirror 16 has a similar function to that of the other bending mirrors but is different from them in that it is disposed so as to reflect laser light before being collimated. That is, immediately after being outputted, the green laser light beam enters the bending mirror 16, by which a travel direction thereof is changed, and is then collimated by the lens optical system 17.

The green laser light beam, after being collimated by the lens optical system 17, takes optical paths in the same plane, except immediately upstream and downstream of the projection mirror 8 (downstream of the bending mirror 15). That is, after being collimated by the lens optical system 17, the green laser light beam travels, in the same plane, via the bending mirror 18, the dichroic mirror 14, and the bending mirror 15 in this order.

A blue laser light beam, after being outputted from the laser light source part 1-B, travels via a lens optical system 19, the dichroic mirror 13, the dichroic mirror 14, the bending mirror 15, and the projection mirror 8 in this order and is reflected by the projection mirror 8 to enter the scanning mirror 3. The lens optical system 19 is intended to collimate laser light in the form of divergent light into parallel light.

The blue laser light beam, after being collimated by the lens optical system 19, takes optical paths in the same plane, except immediately upstream and downstream of the projection mirror 8 (downstream of the bending mirror 15). That is, after being collimated by the lens optical system 19, the blue laser light beam travels, in the same plane, via the dichroic mirror 13, the dichroic mirror 14, and the bending mirror 15 in this order.

In the first embodiment, the optical paths of all of red, green, and blue laser light beams, except immediately upstream and downstream of the projection mirror 8 (downstream of the bending mirror 15), are included in the same plane, and this plane is made orthogonal to the normal direction N of the reflection surface 3a of the scanning mirror 3 in the non-driven state. In other words, the above-described plane is made parallel to the reflection surface 3a of the scanning mirror 3 in the non-driven state.

Furthermore, in the first embodiment, in plan (see Fig. 2), at least some of the optical paths included in the above-described plane are disposed in a region overlapping the scanning portion 2. To be specific, red and green laser light beams take optical paths in the region over the scanning portion 2 until shortly before entering the dichroic mirror 14 and again take optical paths in the region over the scanning portion 2 after being reflected by the bending mirror 15. In this embodiment, most part of each of the laser light source parts 1-R and 1-B on the light output side is positioned in a region where it fully overlaps the scanning portion 2, so that, immediately after being outputted, red and blue laser light beams start taking optical paths in the region over the scanning portion 2. On the other hand, a green laser light beam takes optical paths in the region over the scanning portion 2 after being reflected by the bending mirror 15 but does not take optical paths in the region over the scanning portion 2 before that.

Furthermore, in the first embodiment, the various optical components are disposed to be in the state shown in Figs. 2 and 3, and thus each of red, green, and blue laser light beams is reflected four times before entering the scanning mirror 3. That is, a red laser light beam is reflected by the bending mirror 12, the dichroic mirror 14, the bending mirror 15, and the projection mirror 8 in this order, i.e. is reflected four times. A green laser light beam is reflected by the bending mirror 16, the bending mirror 18, the bending mirror 15, and the projection mirror 8 in this order, i.e. is reflected four times. Furthermore, a blue laser light beam is reflected by the dichroic mirror 13, the dichroic mirror 14, the bending mirror 15, and the projection mirror 8 in this order, i.e. is reflected four times. In the plane orthogonal to the normal direction N of the reflection surface 3a of the scanning mirror 3 in the non-driven state, each of red, green, and blue laser light beams is reflected three times. Although in this embodiment, the dichroic mirror refers to a folding mirror, instead thereof, a dichroic prism or a reflection prism may be used for synthesizing laser light.

In the first embodiment, as described above, red, green, and blue laser light beams are collimated and are then reflected by a plurality of optical components (the bending mirrors and the dichroic mirrors) to travel toward the scanning mirror 3. In addition, where an optical path between any two of the optical components different from each other is defined to form one optical path, the plane including at least two optical paths is made orthogonal to the normal direction N of the reflection surface 3 a of the scanning mirror 3 in the non-driven state. Thus, even in a case where optical paths are made somewhat long for the purpose of obtaining an optimum optical path length, the optical paths are brought to a state of being folded in the plane orthogonal to the normal direction N of the reflection surface 3a of the scanning mirror 3 in the non-driven state and thus can be disposed collectively in a compact manner. This allows the scanning optical system 10 to be reduced in plan area and in thickness and thus can achieve miniaturization of the scanning optical system 10.

Particularly in the first embodiment, some of optical paths of each of red and blue laser light beams (optical paths the laser light beams take until shortly before reaching the dichroic mirror 14) are disposed in the region over the scanning portion 2, and thus a required optical path length can be secured in the region over the scanning portion 2. Thus, there is no need to make optical paths so long that they extend to a region other than the region over the scanning portion 2 for the purpose of obtaining an optimum optical path length. This can reduce the presence of optical paths in the region other than the region over the scanning portion 2. Consequently, the scanning optical system 10 can be further reduced in plan area as a result of the thus reduced presence of optical paths in the region other than the region over the scanning portion 2.

In the first embodiment, this configuration allows the scanning optical system 10 to have, in plan (see Fig. 2), a substantially square shape whose each side length is about 23 mm. Furthermore, this configuration also allows the scanning optical system 10 to have a thickness of about 7 mm.

Furthermore, as described above, the first embodiment is configured so that each of red, green, and blue laser light beams is reflected four times before entering the scanning mirror 3 and thus easily allows optical paths to be disposed collectively in a compact manner. Furthermore, this configuration also easily allows red, green, and blue laser light beams to be synthesized and the laser light beams thus synthesized to enter the scanning mirror 3.

Furthermore, in the first embodiment, as described above, the scanning portion 2 is constituted of MEMS into which the scanning mirror 3 is incorporated, and thus the scanning portion 2 can be reduced in thickness, so that it becomes easy to form the scanning optical system 10 to be thin.

Furthermore, as described above, the first embodiment is configured so that the scanning mirror 3 is rotatable around the two axes orthogonal to each other. Thus, two-dimensional scanning with synthesized laser light can be performed using a single scanning mirror as the scanning mirror 3, so that there is no need to use two scanning mirrors to perform two-dimensional scanning with synthesized laser light. This reduces a space required for installing a scanning mirror and thus can achieve further miniaturization of the scanning optical system 10.

Furthermore, as described above, the first embodiment is configured so that the scanning mirror 3 is driven using the piezoelectric element 5a, and thus thanks to the thin structure of the piezoelectric element 5a, which is still sufficient for the piezoelectric element 5a to allow the scanning mirror 3 to swing, the scanning portion 2 of the piezoelectric driving type is formed to be extremely thin.

Furthermore, as described above, the first embodiment has a configuration in which the laser light source parts 1-R, 1-G, and. 1-B are disposed so that their respective light output directions are parallel to the reflection surface 3a of the scanning mirror 3 in the non-driven state, and thus at least two optical paths can be easily disposed in the plane orthogonal to the normal direction N of the reflection surface 3 a of the scanning mirror 3 in the non-driven state. Furthermore, each of the laser light source parts 1-R, 1-G, and 1-B partially overlaps the scanning portion 2, and thus the scanning optical system 10 can be easily reduced in plan area.

Furthermore, in the first embodiment, as described above, the laser light source parts 1-R and 1-B are constituted of a red semiconductor laser and a blue semiconductor laser, respectively, and thus thanks to the small size of the semiconductor lasers, the laser light source parts 1-R and 1-B can be reduced in size. This can easily achieve further reductions in plan area and in thickness of the scanning optical system 10.

Referring to Fig. 1, assuming that projection is performed with the mobile terminal 40 installed on an installation stand (not shown), laser light is outputted from a surface 40a facing a side opposed to the side of the installation stand, and thus it is possible to make the laser light travel toward the projection surface 41, while maintaining the advantage that the mobile terminal 40 is of a thin type. Furthermore, in this case, there is no need to incline the mobile terminal 40 at the time of projection.

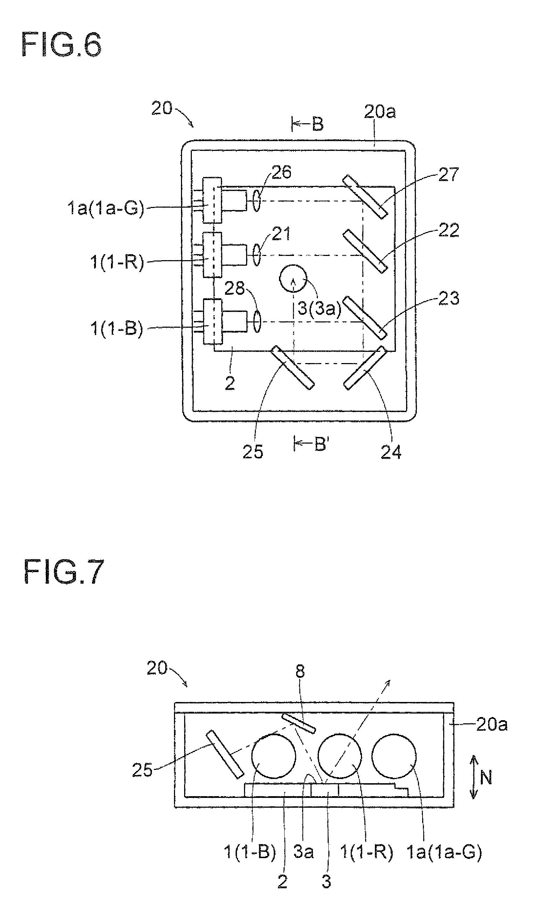

Next, referring to Figs. 6 and 7, the following describes a scanning optical system 20 according to a modification example of the first embodiment.

In the modification example of the first embodiment, a laser light source part 1a (1a-G) constituted of a green semiconductor laser of the CAN package type is used for generating a green laser light beam.

Furthermore, red and blue laser light beams are generated by laser light source parts 1-R and 1-B having the same configurations as those in the foregoing first embodiment. This modification example is configured so that red, green, and blue laser light beams take optical paths shown in Figs. 6 and 7 (chain double-dashed lines in the figures).

Two-dimensional scanning with synthesized laser light is performed by a scanning portion 2 (scanning mirror 3) having the same configuration as that in the foregoing first embodiment. A projection mirror 8 is disposed near above the scanning mirror 3 (see Fig. 7), and synthesized laser light reflected by the projection mirror 8 is projected onto the scanning mirror 3. In Fig. 6, the projection mirror 8 is not shown for the sake of clarity of the figure.

Furthermore, various components constituting the scanning optical system 20 are housed in a case member (casing) 20a smaller than the case member 10a of the foregoing first embodiment. In the case member 20a, the laser light source parts 1a-G, 1-R, and 1-B are arranged in this order in a direction from an upper side toward a lower side in Fig. 6. Moreover, the laser light source parts 1-R, 1a-G, and 1-B are disposed so that their respective light output directions are the same and parallel to a reflection surface 3a of the scanning mirror 3 in a non-driven state.

To specifically describe optical paths, a red laser light beam, after being outputted from the laser light source part 1-R, travels via a lens optical system 21, a dichroic mirror 22, a dichroic mirror 23, a bending mirror 24, a bending mirror 25, and the projection mirror 8 in this order and is reflected by the projection mirror 8 to enter the scanning mirror 3.

The lens optical system 21 is intended to collimate laser light in the form of divergent light into parallel light. The dichroic mirror 22 reflects a red laser light beam while transmitting a green laser light beam therethrough and is disposed as shown in Fig. 6 so as to have a function of synthesizing red and green laser light beams. Furthermore, the dichroic mirror 23 transmits red and green laser light beams therethrough while reflecting a blue laser light beam and is disposed as shown in Fig. 6 so as to have a function of synthesizing red, green, and blue laser light beams. The dichroic mirrors 22 and 23 each represent one example of the "optical components" of the present invention. The bending mirrors 24 and 25 are intended to simply change a travel direction of laser light and each also represent one example of the "optical components" of the present invention.

The red laser light beam, after being collimated by the lens optical system 21, takes optical paths in the same plane, except immediately upstream and downstream of the projection mirror 8 (downstream of the bending mirror 25). That is, after being collimated by the lens optical system 21, the red laser light beam travels, in the same plane, via the dichroic mirror 22, the dichroic mirror 23, the bending mirror 24, and the bending mirror 25 in this order.

A green laser light beam, after being outputted from the laser light source part 1a-G, travels via a lens optical system 26, a bending mirror 27, the dichroic mirror 22, the dichroic mirror 23, the bending mirror 24, the bending mirror 25, and the projection mirror 8 in this order and is reflected by the projection mirror 8 to enter the scanning mirror 3.

The lens optical system 26 is intended to collimate laser light in the form of divergent light into parallel light. The bending mirror 27 is intended to simply change a travel direction of laser light and represents one example of the "optical components" of the present invention.

The green laser light beam, after being collimated by the lens optical system 26, takes optical paths in the same plane, except immediately upstream and downstream of the projection mirror 8 (downstream of the bending mirror 25). That is, after being collimated by the lens optical system 26, the green laser light beam travels, in the same plane, via the bending mirror 27, the dichroic mirror 22, the dichroic mirror 23, the bending mirror 24, and the bending mirror 25 in this order.

A blue laser light beam, after being outputted from the laser light source part 1-B, travels via a lens optical system 28, the dichroic mirror 23, the bending mirror 24, the bending mirror 25, and the projection mirror 8 in this order and is reflected by the projection mirror 8 to enter the scanning mirror 3. The lens optical system 28 is intended to collimate laser light in the form of divergent light into parallel light.

The blue laser light beam, after being collimated by the lens optical system 28, takes optical paths in the same plane, except immediately upstream and downstream of the projection mirror 8 (downstream of the bending mirror 25). That is, after being collimated by the lens optical system 28, the blue laser light beam travels, in the same plane, via the dichroic mirror 23, the bending mirror 24, and the bending mirror 25 in this order.

In the modification example of the first embodiment, similarly to the foregoing first embodiment, all of red, green, and blue laser light beams take optical paths in the same plane, except immediately upstream and downstream of the projection mirror 8 (downstream of the bending mirror 25), and this plane is made orthogonal to a normal direction N (see Fig. 7) of the reflection surface 3a of the scanning mirror 3 in the non-driven state. At least some of the optical paths included in the above-described plane are disposed in a region over the scanning portion 2. In this modification example, however, all of red, green, and blue laser light beams take optical paths in the region over the scanning portion 2 until shortly before entering the bending mirror 24 and again take optical paths in the region over the scanning portion 2 after being reflected by the bending mirror 25.

Furthermore, in the modification example of the first embodiment, the various optical components are disposed to be in the state shown in Figs. 6 and 7, and thus, similarly to the foregoing first embodiment, each of red, green, and blue laser light beams is reflected four times before entering the scanning mirror 3. That is, a red laser light beam is reflected by the dichroic mirror 22, the bending mirror 24, the bending mirror 25, and the projection mirror 8 in this order, i.e. is reflected four times. A green laser light beam is reflected by the bending mirror 27, the bending mirror 24, the bending mirror 25, and the projection mirror 8 in this order, i.e. is reflected four times. A blue laser light beam is reflected by the dichroic mirror 23, the bending mirror 24, the bending mirror 25, and the projection mirror 8 in this order, i.e. is reflected four times. In the plane orthogonal to the normal direction N of the reflection surface 3a of the scanning mirror 3 in the non-driven state, each of red, green, and blue laser light beams is reflected three times.

Moreover, in the modification example of the first embodiment, similarly to the foregoing first embodiment, in plan (see Fig. 6), each of the laser light source parts 1-R, 1a-G, and 1-B partially overlaps the scanning portion 2. Particularly in this modification example, the laser light source parts 1-R, 1a-G, and 1-B are each in a state where most part thereof on a light output side fully overlaps the scanning portion 2. Thus, immediately after being outputted, all of red, green, and blue laser light beams start taking optical paths in the region over the scanning portion 2.

In the modification example of the first embodiment, as described above, some of optical paths of each of all of red, green, and blue laser light beams (optical paths the laser light beams take until shortly before reaching the dichroic mirror 24) are disposed in the region over the scanning portion 2, and thus the scanning optical system 20 miniaturized further than in the foregoing first embodiment can be obtained. The scanning optical system 20 has exterior sizes, in plan (see Fig. 6), of about 18 mm × about 24 mm and a thickness of about 7 mm.

Furthermore, in the modification example of the first embodiment, a small-sized green semiconductor laser of the CAN package type is used as a component for generating a green laser light beam (laser light source part 1a-G), and thus miniaturization of the scanning optical system 20 can be easily achieved. Furthermore, since the component for generating a green laser light beam (laser light source part 1a-G) is reduced in size, the degree of freedom in disposing the optical components is increased accordingly, and thus it also becomes possible to route optical paths so as to achieve further miniaturization.

Other effects of this modification example are similar to those provided by the foregoing embodiment.

### (Second Embodiment)

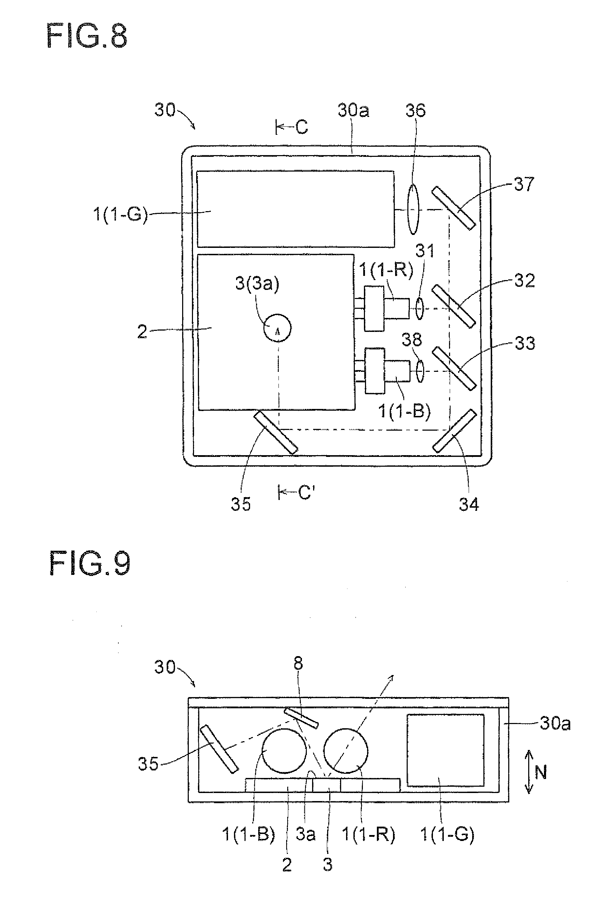

Next, referring to Figs. 8 and 9, the following describes a scanning optical system 30 according to a second embodiment.

In the second embodiment, a laser light source portion 1 and a scanning portion 2 of the same types as those in the foregoing first embodiment are used, and a projection mirror 8 is disposed near above a scanning mirror 3 (see Fig. 9) so that laser light reflected by the projection mirror 8 is projected onto the scanning mirror 3. The second embodiment is different from the foregoing first embodiment in how optical paths (chain double-dashed lines in the figures) are routed.

Furthermore, various components constituting the scanning optical system 30 are housed in a case member (casing) 30a larger than the case member 10a of the foregoing first embodiment. In the case member 30a, laser light source parts 1-G, 1-R, and 1-B are arranged in this order from an upper side toward a lower side in Fig. 8. Furthermore, the laser light source parts 1-R, 1-G, and 1-B are disposed so that their respective light output directions are the same and parallel to a reflection surface 3a of the scanning mirror 3 in a non-driven state.

In the second embodiment, in plan (see Fig. 8), the laser light source parts 1-R, 1-G, and 1-B do not overlap the scanning portion 2, and respective portions thereof on a light output side are positioned in a region relatively distant from the scanning mirror 3. Particularly, respective portions of the laser light source parts 1-R and 1-B on a side opposite to the light output side face the side of the scanning mirror 3.

To specifically describe optical paths, a red laser light beam, after being outputted from the laser light source part 1-R, travels via a lens optical system 31, a dichroic mirror 32, a dichroic mirror 33, a bending mirror 34, a bending mirror 35, and the projection mirror 8 in this order and is reflected by the projection mirror 8 to enter the scanning mirror 3.

The lens optical system 31 is intended to collimate laser light in the form of divergent light into parallel light. The dichroic mirror 32 reflects a red laser light beam while transmitting a green laser light beam therethrough and is disposed as shown in Fig. 8 so as to have a function of synthesizing red and green laser light beams. Furthermore, the dichroic mirror 33 transmits red and green laser light beams therethrough while reflecting a blue laser light beam and is disposed as shown in Fig. 8 so as to have a function of synthesizing red, green, and blue laser light beams. The dichroic mirrors 32 and 33 each represent one example of the "optical components" of the present invention. Furthermore, the bending mirrors 34 and 35 are intended to simply change a travel direction of laser light and each also represent one example of the "optical components" of the present invention.

The red laser light beam, after being collimated by the lens optical system 31, takes optical paths in the same plane, except immediately upstream and downstream of the projection mirror 8 (downstream of the bending mirror 35). That is, after being collimated by the lens optical system 31, the red laser light beam travels, in the same plane, via the dichroic mirror 32, the dichroic mirror 33, the bending mirror 34, and the bending mirror 35 in this order.

A green laser light beam, after being outputted from the laser light source part 1-G, travels via a lens optical system 36, a bending mirror 37, the dichroic mirror 32, the dichroic mirror 33, the bending mirror 34, the bending mirror 35, and the projection mirror 8 in this order and is reflected by the projection mirror 8 to enter the scanning mirror 3.

The lens optical system 36 is intended to collimate laser light in the form of divergent light into parallel light. The bending mirror 37 is intended to simply change a travel direction of laser light and represents one example of the "optical components" of the present invention.

The green laser light beam, after being collimated by the lens optical system 36, takes optical paths in the same plane, except immediately upstream and downstream of the projection mirror 8 (downstream of the bending mirror 35). That is, after being collimated by the lens optical system 36, the green laser light beam travels, in the same plane, via the bending mirror 37, the dichroic mirror 32, the dichroic mirror 33, the bending mirror 34, and the bending mirror 35 in this order.

A blue laser light beam, after being outputted from the laser light source part 1-B, travels via a lens optical system 38, the dichroic mirror 33, the bending mirror 34, the bending mirror 35, and the projection mirror 8 in this order and is reflected by the projection mirror 8 to enter the scanning mirror 3. The lens optical system 38 is intended to collimate laser light in the form of divergent light into parallel light.

The blue laser light beam, after being collimated by the lens optical system 38, takes optical paths in the same plane, except immediately upstream and downstream of the projection mirror 8 (downstream of the bending mirror 35). That is, after being collimated by the lens optical system 38, the blue laser light beam travels, in the same plane, via the dichroic mirror 33, the bending mirror 34, and the bending mirror 35 in this order.

In the second embodiment, similarly to the foregoing first embodiment, all of red, green, and blue laser light beams take optical paths in the same plane, except immediately upstream and downstream of the projection mirror 8 (downstream of the bending mirror 35), and this plane is made orthogonal to a normal direction N (see Fig. 9) of the reflection surface 3 a of the scanning mirror 3 in the non-driven state. In the second embodiment, however, red, green, and blue laser light beams take optical paths in a region over the scanning portion 2 after being reflected by the bending mirror 35 but do not take optical paths in the region over the scanning portion 2 before that. That is, optical paths of red, green, and blue laser light beams, until immediately after they have reached the bending mirror 35 to be reflected thereby, are routed in a region other than the region over the scanning portion 2.

Furthermore, in the second embodiment, the various optical components are disposed to be in the state shown in Figs. 8 and 9, and thus, similarly to the foregoing first embodiment, each of red, green, and blue laser light beams is reflected four times before entering the scanning mirror 3. That is, a red laser light beam is reflected by the dichroic mirror 32, the bending mirror 34, the bending mirror 35, and the projection mirror 8 in this order, i.e. is reflected four times. A green laser light beam is reflected by the bending mirror 37, the bending mirror 34, the bending mirror 35, and the projection mirror 8 in this order, i.e. is reflected four times. Furthermore, a blue laser light beam is reflected by the dichroic mirror 33, the bending mirror 34, the bending mirror 35, and the projection mirror 8 in this order, i.e. is reflected four times. In the plane orthogonal to the normal direction N of the reflection surface 3a of the scanning mirror 3 in the non-driven state, each of red, green, and blue laser light beams is reflected three times.

The second embodiment has the above-described configuration and thus, similarly to the foregoing first embodiment, can achieve miniaturization of the scanning optical system 30. The scanning optical system 30 of the second embodiment, however, is somewhat larger compared with the scanning optical system 10 of the foregoing first embodiment. The scanning optical system 30 has exterior sizes, in plan (see Fig. 8), of about 27 mm × about 27 mm and a thickness of about 7 mm.

Furthermore, as described above, the second embodiment is configured so that the respective portions of the laser light source parts 1-R, 1-G, and 1-B on the light output side are positioned in the region relatively distant from the scanning mirror 3, and thus it is possible to suppress entrance of laser light scattered by the lens optical systems 31. 36, and 38 into the scanning mirror 3.

Other effects of the second embodiment are similar to those provided by the foregoing first embodiment.

The embodiments disclosed herein are to be construed in all respects as illustrative and not limiting. The scope of the invention is indicated by the appended claims rather than by the foregoing description of the embodiments, and all changes that come within the meaning and range of equivalency of the claims are intended to be embraced therein.

For example, each of the foregoing embodiments describes a case where the projector is mounted in a mobile terminal such as a mobile telephone or a PDA. The present invention, however, is not limited thereto, and the projector may be mounted in any type of apparatus other than a mobile terminal. Furthermore, a configuration may also be adopted in which the projector is usable alone.

Furthermore, in each of the foregoing embodiments, all of red, green, and blue laser light beams take optical paths in the same plane, except immediately upstream and downstream of the projection mirror, and this plane is made orthogonal to the normal direction of the reflection surface of the scanning mirror in the non-drive state. The present invention, however, is not limited thereto and may be applied to any case as long as, where an optical path between any two of the optical components different from each other is defined to form one optical path, at least two optical paths are included in the plane orthogonal to the normal direction of the reflection surface of the scanning mirror in the non-driven state. Or alternatively, the plane including the at least two optical paths may be disposed to be inclined with respect to (so as to intersect) the normal direction of the reflection surface of the scanning mirror in the non-driven state to such an extent that the plane can still be housed in the casing.

Furthermore, in each of the foregoing embodiments, the optical components are disposed to be in the state shown in Fig. 2, 6, or 8. The present invention, however, is not limited thereto, and positions at which the optical components are disposed and the number of the optical components used can be changed depending on the intended use.

Furthermore, in each of the foregoing embodiments, the piezoelectric element is incorporated into the scanning portion, and the scanning mirror is driven by the use of the piezoelectric element. The present invention, however, is not limited thereto, and the scanning mirror may be driven by any method. The use of a piezoelectric element, however, makes it easier to achieve a thickness reduction of the scanning portion.

Furthermore, in each of the foregoing embodiments, synthesized laser light is reflected by the projection mirror to enter the scanning mirror. The present invention, however, is not limited thereto, and a configuration may also be adopted in which the projection mirror is omitted, and the scanning mirror is disposed in a region in which the projection mirror is originally intended to be positioned. In this case, each of red, green, and blue laser light beams is reflected three times before entering the scanning mirror.

### List of Reference Signs

1,1-R, 1-G, 1-B, 1a, 1a-G Laser light source portion
2 Scanning portion
3 Scanning mirror
3a Reflection surface
5a Piezoelectric element
8 Projection mirror (Optical component)
10,20,30 Scanning optical system
11, 17, 19, 21, 26, 28, 31, 36, 38 Lens optical system
12, 15, 18, 24, 25, 27, 34, 35, 37 Bending mirror (Optical component)
13, 14, 22, 23, 32, 33 Dichroic mirror (Optical component)
41 Projection surface
100 Projector

## Claims

1. A scanning optical system, comprising:
a laser light source portion that outputs a plurality of laser light beams;
a lens optical system that collimates each of the plurality of laser light beams; and
a scanning portion that has a scanning mirror for reflecting the plurality of laser light beams toward a projection surface and performs scanning with the plurality of laser light beams through varying an inclination of the scanning mirror,
wherein the scanning optical system is configured so that:
the plurality of laser light beams after being collimated are reflected by a plurality of optical components to travel toward the scanning mirror; and
where an optical path between any two of the optical components different from each other is defined to form one optical path, a plane including at least two optical paths intersects a normal direction of a reflection surface of the scanning mirror in a non-driven state.

2. The scanning optical system according to claim 1, wherein
the scanning optical system is configured so that at least one of the plurality of laser light beams is reflected three or more times in a plane orthogonal to the normal direction of the reflection surface of the scanning mirror in the non-driven state and then enters the scanning mirror.

3. The scanning optical system according to claim 1, wherein
the scanning portion is constituted of micro-electro-mechanical systems into which the scanning mirror is incorporated, and the scanning mirror incorporated into the micro-electro-mechanical systems is rotatable around two axes orthogonal to each other.

4. The scanning optical system according to claim 3, wherein
the scanning mirror is driven using a piezoelectric element.

5. The scanning optical system according to claim 1, wherein
a light output direction of the laser light source portion is parallel to the reflection surface of the scanning mirror in the non-driven state.

6. The scanning optical system according to claim 1, wherein
at least one of the plurality of laser light beams is generated by a semiconductor laser.

7. A projector, comprising:
a casing; and
a scanning optical system housed in the casing,
wherein the scanning optical system comprises:
a laser light source portion that outputs a plurality of laser light beams;
a lens optical system that collimates each of the plurality of laser light beams; and
a scanning portion that has a scanning mirror for reflecting the plurality of laser light beams toward a projection surface and performs scanning with the plurality of laser light beams through varying an inclination of the scanning mirror,
wherein the scanning optical system is configured so that:
the plurality of laser light beams after being collimated are reflected by a plurality of optical components to travel toward the scanning mirror; and
where an optical path between any two of the optical components different from each other is defined to form one optical path, a plane including at least two optical paths intersects a normal direction of a reflection surface of the scanning mirror in a non-driven state.

8. The projector according to claim 7, wherein
the projector is configured so that, in the casing, at least one of the plurality of laser light beams is reflected three or more times in a plane orthogonal to the normal direction of the reflection surface of the scanning mirror in the non-driven state and then enters the scanning mirror.

9. The projector according to claim 7, wherein
the projector is configured so that, in the casing, at least one of the plurality of laser light beams is reflected three or more times in a plane parallel to the reflection surface of the scanning mirror to travel along at least three sides of the casing and then enters the scanning mirror.
